# EUROPEAN PATENT APPLICATION

(11) **EP 1 383 131 A2**
(43) Date of publication of application: **21.01.2004**
(21) Application number: 03014521.3
(22) Date of filing: 03.07.2003
(51) Int. Cl.: G11B 33/04

(54) **Container for disc-like recording mediums**

(30) Priority: 17.07.2002 JP 2002208899
(71) Applicant: Pioneer Corporation, Tokyo-to (JP)
(72) Inventor: Matsuda, Norio, Pioneer Corporation Kawagoe Works, Kawagoe-shi, Saitama-ken (JP); Goto, Hiroki, Pioneer Corporation Kawagoe Works, Kawagoe-shi, Saitama-ken (JP); Ono, Yoshitaka, Pioneer Corporation Kawagoe Works, Kawagoe-shi, Saitama-ken (JP)
(74) Representative: Reinhard - Skuhra - Weise & Partner GbR

(57) **Abstract**

There is provided a DVD case (XC) that enables a player, such as a DVD player, which can be made compact, to perform a successive replay over different disc-like recording mediums, such as DVDs, in a smooth and quick manner. The DVD case, which is able to accommodate a plurality of DVDs (100) in its containing space, is provided both an upper lid member (XC1) and a lower lid member (XC2) configured to form the containing space and to be mutually separable, guide mechanisms (XG1, XG2), and openings (XC14H, XC15H). The guide mechanisms are disposed on the upper and lower lid members, respectively, and are in charge of fixing the DVDs in the containing space. The openings are formed through the upper and lower lid members, respectively, so that the outer circumferential edges of the DVDs are partly exposed to the outside of the DVD case.

## Description

### BACKGROUND OF THE INVENTION

### 1. Field of the Invention

The present invention relates to a container for disc-like recording medium, which have the capability of containing a plurality of disc-like recording mediums, such as CDs (Compact Discs), MD (Mini Discs), and DVD (Digital Versatile Discs).

### 2. Description of the Related Art

Recording mediums, such as CDs, MDs, and DVDs, have already been available commercially, together with various types of players for replaying information recorded on such mediums. The players include an indoor type of player for indoor use, such as listening to music and viewing movies, and an on-vehicle type of player for automobile use. In the on-vehicle type of player, to allow crews to listen to music or view movies, the player operates in association with speakers electrically connected to a car stereo system or an image display unit or others electrically connected with a car navigation system. If such a car stereo system or a car navigation system is already mounted on the vehicle, those systems can be used as part of the on-vehicle type of player.

Among the foregoing various types of recording mediums, the DVD is greater than other types of recording mediums in that a larger amount of content information, such as video and audio data, can be recorded on a single disc. For example, content information that corresponds to video and audio data required for one full movie can even be recorded on a single DVD. Hence it can be considered that the DVD will prevail as such recording medium in the market.

A DVD player, which is one type of the information replaying apparatus, replays pieces of information recorded on the DVD. Some conventional DVD players have been configured to contain a plurality of DVDs, in which the next DVD can be replayed after the replay of one DVD has been completed, without labor for unloading the replayed DVD and unloading the next DVD to be replayed. Practically, for such a successive replay operation, there has been known a disc case equipped with a plurality of trays on each of which a DVD is placed. And both of the DVD player and the disc case have been constructed to permit the disc case to be loaded into the DVD player at a stroke. In this construction, when a certain DVD is desired to be replayed, a tray on which the DVD to be replayed is placed is first pulled out of the disc case within the DVD player. A unit called "pickup unit," which includes a disc clamp mechanism, a spindle motor, and a pickup, is then moved to a predetermined position that faces the pulled-out DVD, before processing for the replay is started. As clear from the above, this type of DVD player eliminates the need for manual unloading/loading, or exchanging DVDs, thus relieving user's operational burden.

However, the foregoing DVD player for the successive replay operation has the problems as follows. A first problem is concerned with an additional space required within the DVD player. That is, in the DVD player with the disc case, a space required for pulling out each tray within the DVD player (i.e., a space where the pickup unit is arranged at a predetermined position for replaying a DVD) should be secured. This will inevitably lead to larger-sized DVD players. To be specific, it is necessary that at least half the tray be pulled out of the disc case. This condition is especially hard to keep when such DVD player is mouthed on a vehicle, because there is not so much ambient spacing for the DVD player in usual vehicles and possible spacing for that is limited to some locations such as the trunk. In other words, in general, it is very difficult to mount such successive-replay type of DVD players as part of the dashboard regarded as being the most appropriate location for such mounting.

Furthermore, in the case of the foregoing DVD player, a transient time from the finish of replay of a certain DVD to the start of replay of the next DVD is relatively longer. This is because the successive replay operation requires a series of operations that should be done successively. That is, the pickup unit and others step back from a DVD that has been subjected to the replay, the tray on which the DVD is placed is moved back into the disc case, the tray on which another DVD is placed is pulled out of the disc case, and the pickup unit and others advance to a given position for the pulled-out DVD. Accordingly, a smooth transit operation from one DVD to another (that is, a shorter interval of time between the replay of two DVDs) is difficult to obtain, even though a plurality of DVDs can be loaded at a time.

### SUMMARY OF THE INVENTION

The present invention has been made with due consideration to the foregoing drawbacks. An object of the present invention is to provide a container for disc-like recording mediums that is able to provide a smoother and quicker transit operation between a after-replay disc-like recording medium to another disc-like recording medium to be replayed from now in a compact-size information replaying apparatus such as a DVD player.

In order to achieve the foregoing object, the present invention provides a container for containing a disc-like recording medium, comprising: a first lid member and a second lid member which are configured to be separable one from the other; and fixing members secured on the first and second lid members respectively and configured to fix a plurality of disc-like recording mediums overlapped coaxially one on another, each of the first and second lid members having an opening formed therethrough to expose at least part of outer circumferential edges of the plurality of disc-like recording mediums to an outside of the first and second lid members.

In the disc-like recording medium container according to the present invention, unlike the conventional, even when a plurality of DVDs (i.e., one example of disc-like recording mediums) are replayed successively, there is no necessity of occupying a relatively larger space within a DVD player. In other words, by using the disc-like recording medium container according to the present invention, compact-size information replay apparatuses, such as DVD players made into compact forms, are able to replay a plurality of DVDs successively. Further, the container of the present invention makes it possible to perform a successive replay of DVDs from one to another. These features derive from the fact that the disc-like recording medium container of the present invention operates as follows.

First of all, the container of the present invention is provided with no tray described in the related art, but is possible to contain a plurality of DVDs. For containing the DVDs, the fixing members each secured on the first and second lid members are able to fix adequately the plural DVDs coaxially overlapped one on another and the first and second lid members are opposed to each other and coupled (but, mutually separable) with each other using proper means. This way enables the plural DVDs to be contained in the first and second lid members that have been coupled. Moreover, if desired, the disc-like recording medium container in which a plurality of DVDs are accommodated can be loaded into a DVD player manufactured dedicatedly to the container according to the present invention.

In the present invention, the following operations or features can particularly be provided. That is, using the "openings" formed in the first and second lid members makes it possible to gasp, from the outside, one of a plurality of DVDs contained in the container and to separate the first and second lid members from each other, together with the DVDs positioned on both sides (upper and lower sides) of the grasped DVD. One example can be given such that six DVDs are accommodated in the disc-like recording medium container and the fourth DVD is a target to be grasped. In such a case, three DVDs are present on one side of the fourth DVD, while two DVDs are present on the other side. Thus, the three DVDs can be moved together with the first lid member (or the second lid member), whilst the two DVDs can be move together with the second lid member (or the first lid member). Hence, if operations for such movements are done, a DVD to be replayed can be separated from remaining DVDs, with less spacing for the separation, in a smooth and quick manner.

Two conditions concerning the "less spacing" are as follows. Referring to the foregoing example again, one condition is satisfied if there is provided a sufficient distance between an information recorded plane of the grasped fourth DVD and the foregoing three DVDs (or the foregoing two DVDs; depending on the information recorded plane of the fourth DVD is located on which side) in order to accept a pickup unit in the space. The other is a separation distance which should be preserved between the foregoing two DVDs (or the foregoing three DVDs), which locate on the opposite side to the information recorded plane, and the fourth DVD. It is enough that this separation distance is set to a minimum amount that allows the fourth DVD from interfering with the adjacent DVD. Thus, unlike the conventional, it is unnecessary for the DVD player to have an additional inner space used for drawing half or more each tray from a disc case.

Further, the reason why the above separation can be performed in a "smooth and quick manner" is that, as described above, the actions necessary for separating a DVD to be replayed from the others are relatively compact. This can be explained with reference to another example in which the fifth DVD is desired to be selected after the separation of the fourth DVD, as described above. In such a case, the pickup unit is first made to retreat, the first and second lid members are mutually coupled again, and the fifth DVD is grasped. Then, the four DVDs locating on one side of the fifth DVD and one DVD locating on the other side thereof are separated again from the fifth DVD in the mutually opposite directions, together with the first and second lid members. The foregoing coupling, grasping and separation operations are limited to ranges of shorter distances, whereby the selecting operations of the DVDs can be done in the smooth and quick manner.

As described above, according to the disc-like recording medium container according to the present invention, even when a more compact DVD player is adopted, the DVD player is able to have the capability of performing a successive replay over different DVDs in a smooth and quick manner.

In the present invention, it is also required to fulfill a condition that the first and second lid members are able to "contain" the disc-like recording mediums and "mutually separable." One of best preferred examples is that such condition is fulfilled by having a protrusion and a recess, which will be described later as one mode of the present invention. However, such a mode is not always a definitive list, but other various modes can be conceivable within the scope of the present invention. For example, the first lid member (or the second lid member) may be equipped with a predetermined number of claws and the second lid member (or the first lid member) is equipped with a predetermined number of fit holes formed so as to correspond to the claws positionally. Thus, "containing" the DVDs or others can be done by fitting the claws in the fit holes, while the separation between the first and second lid members can be achieved by separating the claws from the fit holes.

In another mode of the disc-like recording medium container according the present invention, the fixing members are configured to fix the disc-like recording mediums such that planes of the disc-like recording mediums come into contact with each other.

In this mode, the disc-like recording mediums are overlapped one on another in such a manner that a front surface of each DVD is in direct contact with the back surface of another DVD. Hence, the DVDs can be contained compactly, thus saving space in a surer fashion.

Another aspect of the disc-like recording medium container according to the present invention is provided such that the fixing member is formed into a cylindrical shape fittable in a central hole of each of the plurality of disc-like recording mediums.

Hence, since in the container is provided the cylindrical fixing member fittable into the central hole of each DVD. This allows the DVDs to be secured surely in the container, whereby enhancing safety in storage, delivery, and other.

In cases where the fixing members are formed into the cylindrical shapes, it is preferred that each fixing member is provided with a disc member that has a hole of which circumferential surface is threaded and has protrusions on its outer circumferential surface, a cylindrical member that has longitudinal slits formed along its longitudinal direction so that the disc member is incorporated in its inner bore and the protrusions are allowed to protrude outward through the longitudinal slits, and a ball screw that can be screwed together with the hole of the disc member so as to pass the disc member.

Hence each fixing member comprises three or more components which include, in turn from the outer circumferential side, a cylindrical member, and the ball screw. The ball screw engages with a hole formed longitudinally through the disc member and passes therethrough. A thread is formed on the circumferential surface of the hole. Protrusions, which are formed on the outer circumferential surface of the disc member, are made to protrude from longitudinal slits formed thorough the cylindrical member, respectively.

Therefore, when the ball screw is rotated around the center axis passing at the center of a section perpendicular to its axial direction, the disc member tries to rotate responsively to the rotation of the ball screw. Actually, however, because the protrusions on the disc member are respectively inserted into the silts of the cylindrical member to protrude therefrom, the disc member is prohibited from rotating (that is, locked). In addition, due to the fact that the balls screw engages with the thread on the hole of the disc member, rotating the ball screw obliges the disc member to longitudinally move along the axial direction of the cylindrical member.

In addition, provided that the diameter of an imaginary circle formed by tracing the tips of the protrusions of the disc member keeps a properly set relationship with that of the hole formed at the center of each DVD, only moving the disc member within the cylindrical member along its axial direction will readily enable a fixed hold of a DVD to be replayed, chosen from the foregoing plural DVDs; that is, the "separation" of the DVD to be replayed. A more practical example is as follows.

It is now assumed that there are contained six DVDs in a container and the fourth DVD is a target to be "separated." In the cylindrical member of the fixing member formed on the first lid member (or the second lid member), the disc member is longitudinally moved to a position corresponding to the third DVD (counted from one end of the stack consisting of six DVDs). Like the fixing member formed on the first lid member (or the second lid member), the fixing member formed on the second lid member (or the first lid member) operates, so that the disc member, which is different from the first holding member, is moved to a position corresponding to the second DVD (counted from the other end of the stack). Both of the movements may be achieved by rotating the ball screw (partly composing each of fixing members) by proper a proper amount of angl es (for instance, two or more rotations are counted as being 360 degrees, ..., 720 degrees, ..., 1080 degrees, etc., while their reverse rotations are noted as -360 degrees, ..., -720 degrees, etc.). In the course of movements of the disc member toward a DVD to be replayed, the disc member is able to run through the central holes of other DVDs stacked on or above (below) the DVD to be replayed.

Further, if both of the protrusions of each disc member and the central hole of a DVD are adjusted to selection of their materials, sizes and others so that the tips of the protrusions of each disc member are able to press outwardly the inner circumferential surface of the central hole of the DVD, each of the disc members will fixedly hold each DVD at the central hold (that is, holding each DVD from it inner circumferential surface). After realizing this holding state, the outer circumferential edged of a DVD to be replayed is gasped by any appropriate grasping means operating through the opening formed in the lid first and second members, and forces are applied to the grasping means, with their working points at the fixing members on the first and second lid members. This application of the forces permits a set of both the three DVDs and the first lid member (or the second lid member) and a set of both the two DVDs and the second lid member (or the first lid member) to move, respectively, so as to separate from the DVD to be replayed. In this case, the forces exerted on the fixing members on the first and second lid members are opposite in their directions to each other.

In this way, the above configuration is able to specify one desired DVD among a plurality of DVDs, and then separate the desired DVD from the others in an easier and steadier manner.

In another mode of the disc-like recording medium container according to the present invention, the first and second lid members are configured to enable the first lid member to open and close to the second lid member in a state where a recess formed on one of the first and second lid members is fitted with a protrusion formed on the other of the first and second lid members and to enable the first and second lid members to be separable from each other by releasing the fitted state between the fist and second lid members.

This configuration enables the first and second lid members to be coupled to each other, to be opened and closed, and to be separated from each other in a smooth manner.

It is preferred that the protrusion and the recess are formed as bellows.

Concretely, each of the first and second lid members is approximately shaped into a cuboid, in which a containing space surrounded by part or all the planes of the cuboid, other than one particular open surface, is formed therein. For containing disc-like recording mediums, the first and second lid members are arranged so that the one particular open surface of each lid member is opposed to each other. The protrusion is formed on each of two facing planes of the first lid member, the two facing planes being opposed to each other via the containing space. On the other hand, the recess is formed on each of two facing planes of the second lid member, the two facing planes being opposed to each other via the containing space and positionally corresponding to the opposing planes of the first lid member. Additionally, the recesses are located so as to positionally correspond to the protrusions, so that the protrusions can be fitted in the recesses.

By employing this configuration, there can be provided a disc-like recording medium container shaped as a whole into a cuboid form. In this example, the protrusions and recesses are provided in a combined fashion, with the result that the first lid member (or the second lid member) can be rotated toward or away from the second lid member (or the first lid member) around an axis passing the fitted portions of the protrusions and recesses, provided the protrusions and recesses are formed at given positions on the facing planes of the first and second lid members, respectively. Therefore, it is possible to make the first and second lid members carry out an open/close operation in the same manner as plastic disc cases which are commercially available and in wide use.

Therefore, in addition to a successive replay by loading the DVD case with disc-like recording mediums into a dedicated DVD player, there can be provided a disc-like recording medium container that is convenient in portage, like the normally used conventional disc case. Furthermore, a plurality of DVDs can be stored in the DVD case, greatly enhancing the usability for the storage.

In the case of this example, only the fitted portions of the protrusions and recesses realizes the coupling operation between the first and second lid members, namely, the storage of the disc-like recording mediums. This configuration may further be developed into another form, in which a proper fitting mechanism is provided between the fixing members on the first and second lid members. This additional fitting mechanism permits the mediums, such as DVDs, contained in this container to be fastened more firmly, while still maintaining a simpler configuration, thereby making the delivery of the DVD case easier.

Further, if necessary, the foregoing claws and fitting holes may be disposed as far from the protrusions and recessions as possible, thus strengthening the coupled state of the first and second lid members.

Still further, the foregoing configuration of "a containing space surrounded by part or all the planes of the cuboid, other than one particular open surface, is formed therein" means that each of the first and second lid members may have, in fact, five or less planes, other than a particular one plane (providing an opening), of the cuboid. Because this limitation is referred to have a conceptually enclosed containing space, any space that falls into the definition can be used. Practically, in the case that a space enclosed by four planes of the foregoing five planes but the fifth plane of a cuboid can be supposed to locate thereat, the space sectioned by the four planes falls into the containing space.

As another mode of the present invention, there is provided a disc-like recording medium container, wherein the fixing members consist of a first fixing member secured on the first lid member and a second fixing member secured on the second lid member, both of the first and second lid members being formed approximately into cylindrical shapes and the first fixing member being smaller in a diameter than the second fixing member, wherein the first fixing member is fitted with the second fixing member in cases where the first lid member is closed to the second lid member around an axis passing both the recess and the protrusion that are fitted with each other.

This configuration provides a well adjusted positional relationship among the protrusions and recesses on the first and second lid members and the fixing members, so that the disc case can be used well.

In the case that the protrusions (or recesses) are formed on the first lid member and the recessed (or protrusions) are formed on the second lid member, it is particularly preferred that a releasing member for releasing the fitted state between the recess and the protrusion is arranged on at least one of the first and second lid members.

Hence, the releasing member will cause the fitted state of the protrusions and recesses to be released, which leads to an easier separation between the first and second lid members.

Moreover, in the above configuration, it is also preferred that the releasing member includes a deformable portion formed as a given deformable region included in one of the first and second lid members provided with one of the recess and the protrusion.

Forming such a deformable portion will cause the given deformable region of the first or second lid member to be deformed, thus facilitating the detachment operation between each protrusion and each recess, thus leading to an easier separation between the first and second lid members.

In this case, if the foregoing protrusions and recesses are formed individually on the facing planes of the first and second lid members which constitute a cuboid, it is preferred that the releasing member and the deformable portion are configured as follows.

Practically, a tongue-like member is provided, which constitutes part of each of the two facing planes on which either one of each protrusion or each recess is formed; which is formed into a flat-plate shape including the protrusion or recess; and, of which outer end portion is partly coupled with each facing plane, thus the remaining end portions, other than the partly coupled end portion, being cut and separated from the facing plane. It is therefore possible to detach the protrusions from the recesses, when each tongue-like member is rotationally shifted to deviate from each facing plane around an axis served by the partly coupled end portion with the facing plane.

According to this configuration, the releasing member and the deformable portion mean to include the "tongue-like member." Namely, the present configuration employs the tongue-like member formed to be included in part in each of the two facing planes on which either the protrusion or the recess is formed. If assuming that the tongue-like member is formed into a quadrangle as the flat-plate shape, for example, its one edge is coupled with the facing plane, while the remaining three edges are cut from the facing plane.

It is therefore possible that the tongue-like member deforms so as to deviate from the facing plane, with the one edge left as an axis from which the member is curved. By way of example, of the remaining three edges, a location on the edge opposed to the one edge rigidly connected to the facing plane itself is pushed inward from outside the container. This pushing operation will enable the tip of the tongue-like member to move so that the tongue-like member is bent at the base edge functioning as a supporting point (that is, the edge rigidly connected to the facing plane, serving as an axis) so as to "curve" inwardly from the facing plane. It is therefore possible to move the tongue-like member for the foregoing detachment.

That is, the detachment between the protrusions and the recesses can be realized. This operation is derived from the configuration in which each protrusion or each recess is formed on the tongue-like member. When the tongue-like member is simply moved to deviate from the facing plane, the detachment between the protrusion and the recess can be realized. As understood from this example, it is preferred that the protrusion or recess is made to locate at a particular position near to one edge, of the remaining three edges, which is opposed to the one edge coupled with (i.e., integrated with) the facing plane; that is, a particular position near to the tip of the tongue-like member. Employing such configuration allows the foregoing curved movement to be limited to as a smaller range as possible. Preferably, the positions of the protrusions and recesses should be taken into account, when deciding the positions at which the protrusions and recesses are formed, the position at which the tongue-like member locates, or both the positions of the recesses and protrusions and the tongue-like member with the consideration of their relative positional relationships.

As described, in the present example, the directly coupled portions of the first and second lid members, which are realized by the mutual fitting of the protrusion and recesses, can easily be separated from each other, which results in an easier separation between the first and second lid members.

The foregoing and remaining operations and advantages according to the present invention will be cleared from the following embodiments.

### BRIEF DESCRIPTION OF THE DRAWINGS

Other objects and aspects of the present invention will become apparent from the following description and embodiments with reference to the accompanying drawings in which:
FIG. 1 is a perspective view outlining the entire configuration of a DVD case to be loaded into the DVD player shown in FIG. 7;
FIG. 2 is the top plan view of an upper lid member constituting part of the DVD case;
FIG. 3 is an enlarged view detailing the configuration of a tongue-like member shown by a circle A in FIG. 2;
FIG. 4 is a perspective view explaining the entire constitution of the tongue-like member shown in FIG. 3;
FIG. 5 is an exploded perspective view explaining in detail a guide mechanism contained in the DVD case shown in FIG. 1;
FIGS. 6A and 6B illustrates the operations of the guide mechanism contained in the DVD case shown in FIG. 1;
FIG. 7 is a perspective view outlining the entire configuration of a DVD player according to an embodiment of the present invention;
FIG. 8 shows a section of the DVD case shown in FIG. 1, in which pluralities of DVDs are loaded;
FIG. 9 is another section of the DVD case showing another situation, developed from the situation shown in FIG. 8, where the inner circumferences of holes of two DVDs located immediately on and immediately beneath a desired DVD to be replayed are fixedly held by protrusions of disc members of the guide mechanism;
FIG. 10 is another section of the DVD case showing another situation, developed from the situation shown in FIG. 9, where the DVD to be replayed has been separated and a pickup unit is made to locate a position oppose to the information recording surface of the DVD;
FIG. 11 is a perspective view in which the DVD to be replayed has been separated; and
FIG. 12A is an entire view of a conventional disc case;
FIG. 12B is an entire view showing a tray drawn from the disc case, a DVD being laid on the tray; and
FIG. 12C illustrates the inside of a conventional DVD player loaded with the conventional disc case.

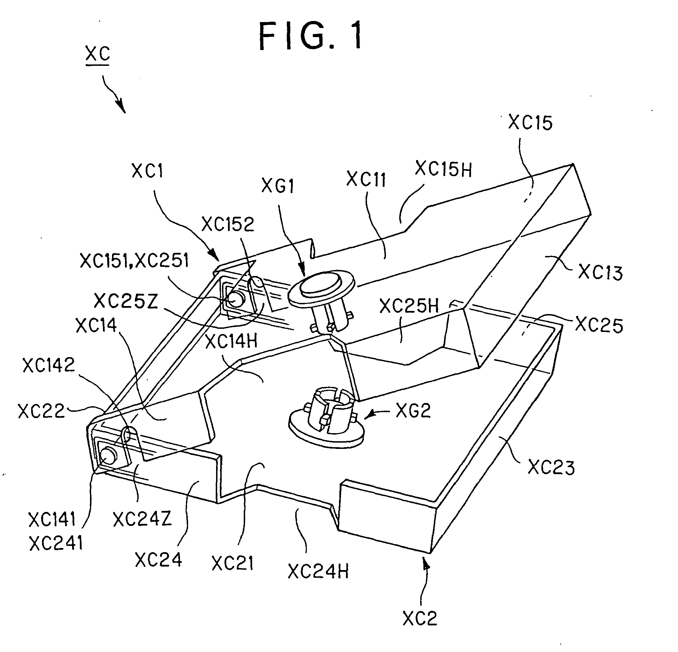

Referring to FIGS. 1 to 6, an embodiment of a DVD case will now be described, to which the disc-like recording medium container according to the present invention is applied.

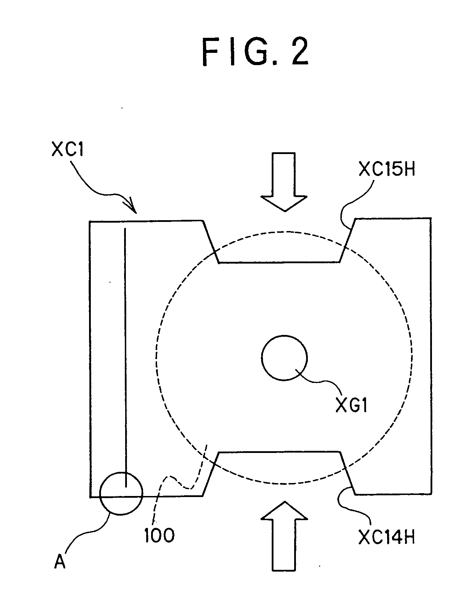

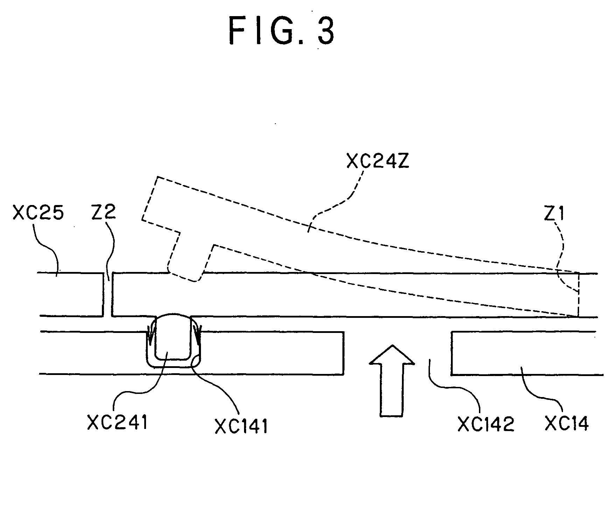

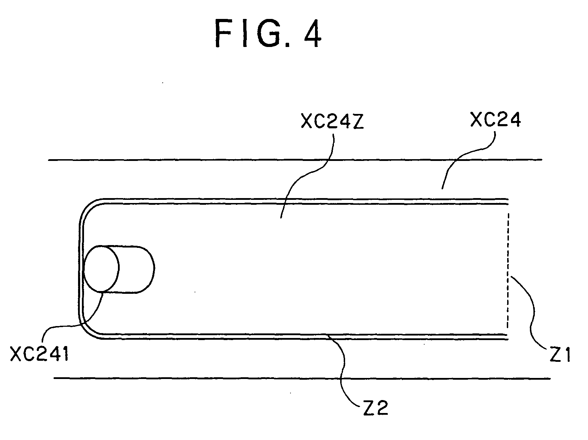

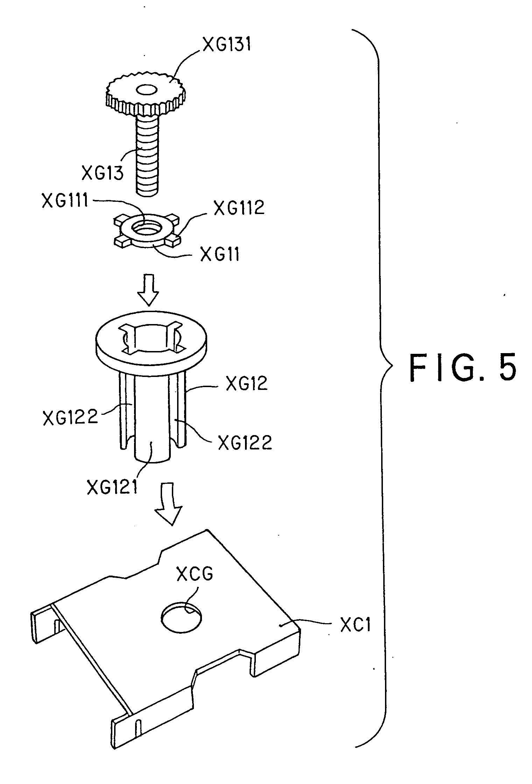

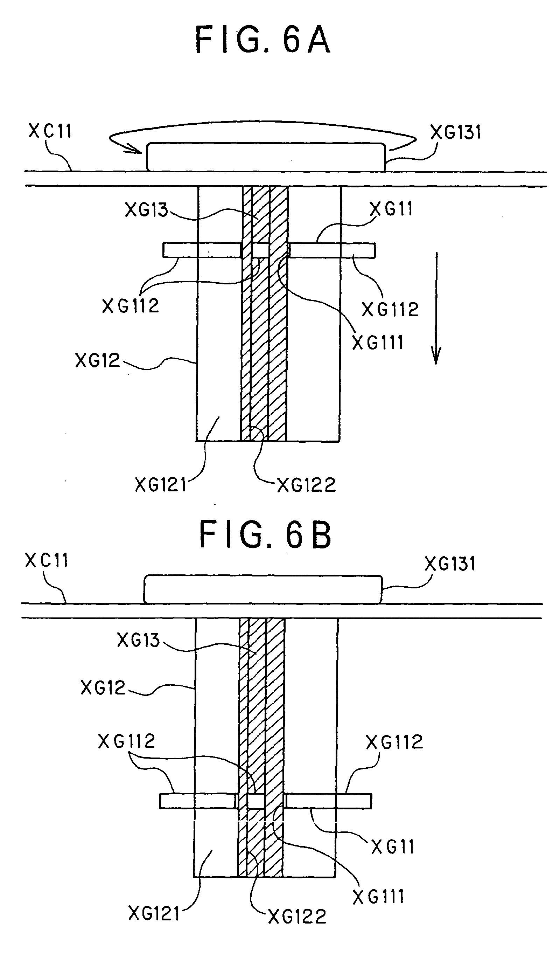

Of the drawings, FIG. 1 is a perspective view outlining the entire configuration of the DVD case according to the embodiment; FIG. 2 is a plan view of an upper lid member composing part of the DVD case; FIG. 3 shows an enlarged view of a region A encircled by a reference A in FIG. 2, which explains the configuration of a tongue-like member; FIG. 4 outlines the entire configuration of the tongue-like member; FIG. 5 is a disassembled perspective view detailing a guide mechanism; and FIG. 6 illustrates the operations of the guide member.

As shown in FIG. 1, the DVD case XC includes, as key parts, an upper lid member XC1, a lower lid member XC2, and guide mechanisms XG1 and XG2 secured to the upper and lower lid members XC1 and XC2 (exemplifying the "holding member" of the present invention), respectively. These key parts will now be detailed in turn.

Each of the upper and lower lid members XC1 and XC2 is shaped to have a containing space enclosed by at least part of the remaining planes other than one plane of a rectangular parallelepiped. Specifically, the upper lid member XC1 has four planes consisting of an upper plane XC11 formed into an approximate rectangular, a side wall plane XC13 perpendicularly standing at one edge of the upper plane XC11, and facing planes XC14 and XC15 not only standing perpendicularly at the remaining two edges of the upper plane XC11 but also being perpendicular to the side wall plane XC13. Incidentally, a side wall surface, which should be located to the opposites side to the above side wall surface XC13, will not be formed in reality. Meanwhile, in the similar manner to the above upper lid member XC1, the lower lid membe4r XC2 has five planes consisting of a lower plane XC21, side wall planes XC22 and XC23, and facing planes XC24 and XC25. As shown in FIG. 1, this lower lid member XC2 includes the side wall plane XC22 positionally corresponding to the side wall of the upper lid member XC1 which has not been formed, unlike the upper lid member XC1.

Each of the above planes is configured as follows. Both of the facing planes XC14 and XC15 of the upper lid member XC1 have openings XC14H and XC15H formed to be cut partly, respectively. Both of the facing planes XC24 and XC25 of the lower lid member XC2 also have openings XC24H and XC25H formed to be cut partly and to be opposed to the foregoing openings XC14H and XC15H, respectively. These openings XC14H, XC15H, XC24H and XC25H are respectively formed to permit DVDs 100 contained in the DVD case XC to be grasped at given positions at the outer circumferences from the outer side, as shown by arrows in FIG. 2. The arrows illustrate grasping directions.

In addition, as shown in FIGS. 2 and 3, on the facing plane XC14 and XC15 of the upper lid member XC1 are formed recesses XC141 and XC151, respectively. On the facing planes XC24 and XC25 of the lower lid member XC2 are projections XC241 and XC251, respectively. In the case of the present embodiment, each of the recesses and projections is located at a given position close to one end (i.e., the leftward end in the case of FIG. 1) of each of the facing planes XC14, XC15, XC24 and XC25. The projections XC241 and XC251 and the recesses XC141 and XC151 are shaped so that each projection XC241 can be fit into each recess XC141, as shown in FIG. 3 that is an enlarged view of a region shown by a reference A in FIG. 2. Though not shown in FIG. 3, the recess XC151 and the projection XC251 are shaped in the same way as the above. In the DVD case XC according to the present embodiment, the fitting configurations formed between the projection XC241 (XC251) and the recess XC141 (XC151) are combined with positioning of the projections XC241 and XC251 and the recesses XC141 and XC151, with the result that, as shown in FIG. 1, the upper lid member XC1 can be opened and closed from to the lower lid member XC2 around an axis realized by the mutually fitted portions (refer to a bi-directional arrow in FIG. 3).

As shown in FIGS. 1 and 3, the facing planes XC24 and XC25 of the lower lid member XC2 are partitioned to form tongue-like members XC24Z and XC25Z, respectively, in such a manner that each tongue-like member XC24Z (XC25Z) encloses the foregoing protrusion XC241 (XC251). Practically, of these tongue-like member XC24Z and XC25Z, one tongue-like member XC24Z is shaped into an approximate rectangular, as shown in FIGS. 3 and 4. One edge of the tongue-like member XC24Z is rigidly connected with the facing plane XC24 (hereafter the edge is referred to as a "connected edge Z1"). In contrast, the remaining three edges are cut to be disconnected from the facing plane XC24 (hereafter those three edges are referred to as "disconnected edges X2"). This configuration allows the tongue-like member XC24Z to swing about an axis served by the connected edge Z1, as shown by a dashed line in FIG. 3, so that the tip of the member XC24Z deviates from the body of the facing plane XC24. That is, the tongue-like member XC24Z is deformable so that its tip is lifted to cause the member body itself to be curved. Additionally, as shown in FIGS. 1 and 3, to push the tongue-like member XC24Z at a given position nearer to its tip from the outside, a side of the facing plane XC14 (XC15) of the upper lid member XC1 is cut from its edge to form a notch XC142 (XC152). Forming the notch XC142 (XC152) permits the tongue-like member XC24Z to be pushed from the outside, as illustrated by an outline arrow in FIG. 3. Though not shown in detail, the foregoing configurations in relation to the tongue-like member XC24Z are totally applied to those of the tongue-like member XC25Z embedded in the other facing plane XC25.

Both of the upper and lower lid members XC1 and XC2 are made of, by way of example, plastic materials appropriately selected. In the present embodiment, both of the upper and lower lid members XC1 and XC2 are made of a transparent plastic material. This can be seen from FIG. 1, in which some hidden parts, which should be indicated by dashed lines because those parts are hidden by components positioned in front of those parts, are still indicated by dashed lines.

Furthermore, at the centers on the upper and lower planes XC11 and XC21 of the upper and lower lid members XC1 and XC2 are formed guide mechanisms XG1 and XG2, respectively. Each of the guide mechanisms XG1 and XG2 are formed into an almost cylindrical pillar when viewing their appearances, as can be seen in FIG. 1 and other drawings, and can be fitted into central holes of DVDs 100 that have been contained. In addition, an outer diameter of the upper guide mechanism XG1 is determined to be smaller than an inner diameter of the lower guide mechanism XG2, which permits the upper guide mechanism XG1 to be fitted into the lower guide mechanism XG2.

As described above, both of the guide mechanisms XG1 and XG2 are configured in the same manner except that they are different in their diameters from each other. Such configurations will now be described below.

As shown in FIG. 5, each of the guide mechanisms XG1 and XG2 (hereafter, representatively noted by "XG1") is provided with, as essential components, the disc member XG11, cylindrical member XG12, and ball screw XG13. Through the disc member XG11 is formed a hole XG111 on inner surface of which a thread is formed. Four protrusions XG112 are formed on the outer circumferential surface as well. The protrusions XG112, which are made of properly selected elasticity, are formed to protrude outward from the body of the disc member XG11 in four directions (that is, at angular intervals of 90 degrees). When tracking the tips of the four protrusions XG112 will produce an approximate circle, whose diameter is nearly equal to that of the central hole of each DVD 100. Further, besides such "size (diameter)," a specific relationship, which will be described later, is established between the protrusions XG112 and the central hole of each DVD 100.

The cylindrical member XG12 is produced to have a longitudinal inner hole to accept the foregoing disc member XG11 therein and to have four longitudinal slits XG122 formed along a side wall XG121 of the cylindrical member XG12. The slits XG122 are formed at angular internals of 90 degrees around the side wall XG121, correspondingly to the four-way arrangement of the protrusions XG112. As a result, the disc member SG11 contained in the cylindrical member XG12 is allowed to make its protrusions XG112 protrude outwardly through the slits XG122, respectively.

The ball screw XG13 engages with the hole XG111 of the disc member XG11 so that the ball screw XG13 passes through the disc member XG11. Particularly, in the present embodiment, at the tip of this ball screw XG13 is formed a grip XG131. The grip XG113 is griped by each grasping/rotating member 401, as described later, whereby the ball screw XG 13 can be rotated around its longitudinal axis.

Combining the above three main components into one unit as shown in FIGS. 5 and 6 forms the guide mechanism XG1, and the unit is mounted at a guide-mechanism mounting hole XCG formed through the upper lid member XC 1.

The foregoing construction of the guide mechanism XG 1 makes it possible that, as shown in FIGS. 6A and 6B, the disc member XG11 is moved in an up-and-down direction in the figures along the cylindrical member XG12 by rotating the ball screw XG13. If there were no protrusions XG112 on the disc member XG11, rotating the ball screw XG13 would have lead to the rotation of the disc member XG11. However, as clear from FIGS. 1, 5 and 6, the protrusion XG112 on the disc member XG12 protrude outward through the slits 122 of cylindrical member XG12, the disc member XG11 is prohibited from rotating. Thus, because disc member XG12 has the hole XG111 whose inner surface has a thread, the disc member XG12 should move up or down along the cylindrical member XG11.

The above configuration is totally applicable to the guide mechanism formed on the lower lid member XC2. That is, the guide mechanism XG2 has a disc member XG21, a cylindrical member XG22, and a ball screw XG23. The disc member XG21 includes protrusions XG212 and a hole XG211 whose inner surface has a thread is formed through the disc member XG21. Slits XG222 to allow the protrusions XG212 to protrude outward therethrough are formed along the cylindrical member XG22. Furthermore, a grip XG231 is secured to the ball screw XG23.

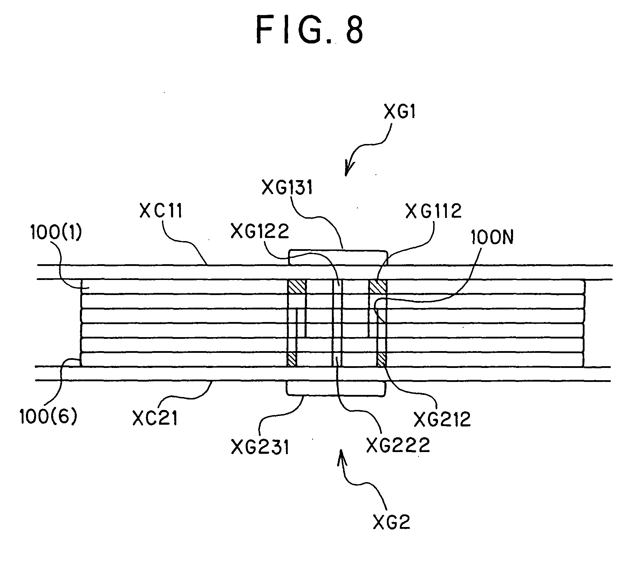

Additionally, the present embodiment has adopted, as described before, the configuration where the guide mechanism on the upper lid member XC1 can be fitted into the guide mechanism on the lower lid member XC2, whereby the disc member XG21, cylindrical member XG22, and others are different in dimensions from the disc member XG11, cylindrical member XG12. On the other hand, it is required that the dimension of a circle formed by tracing the tips of the protrusions on the upper disc member XG11 be equal to that of the protrusions XG212 on the lower disc member XG21. This is because, as will be described later, any of the protrusions XG112 and XG212 should maintain a specific dimensional relationship between those protrusions and the diameter of the central hole of each DVD100 (refer to FIGS. 8 being described later).

Moreover, since the upper guide mechanism XG1 can be fitted into the lower guide mechanism XG2, there is a possibility that the disc member XG1 of the upper guide mechanism XG1 may reach the cylindrical member XG22 of the lower guide mechanism XG2, depending on some situations. In order to make the disc member XG11 move smoothly under any situation, it is at least required the inner diameters of the holes XG111 and XG211 formed through the disc members XG11 and XG21 be equal to the outer diameters of the ball screws XG13 and XG23, respectively, and the guide mechanisms XG 1 and XG2 be positioned on the upper plane XC11 and lower plane XC21 in such a manner that the slits XG122 and XG222 formed along the cylindrical members XG12 and XG22 are mutually connected to form straight continuous slits, respectively (refer to FIGS. 8 described later).

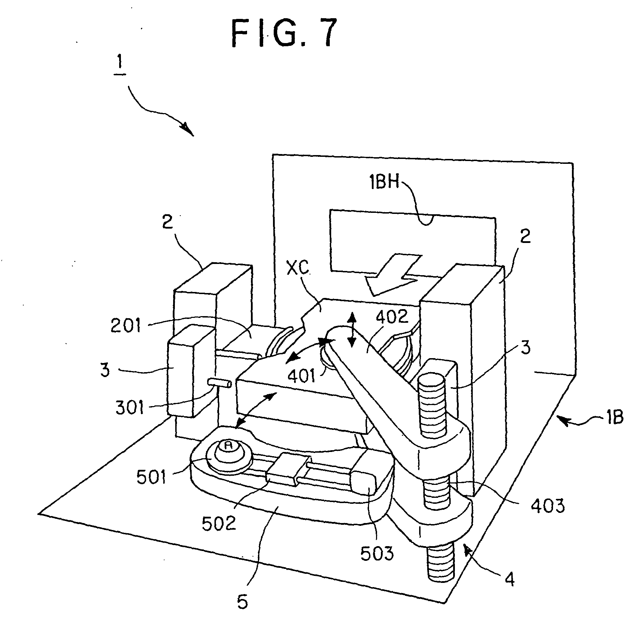

In the following, how to operate the DVD case XC configured as above will now be described with reference to FIGS. 8 and other figures. In the present embodiment, the DVD player described in the following allows the foregoing DVD case XC to be loaded into the player in a direct manner and has the capability of automatically performing various operations, such as separation made between the upper and lower lid members XC1 and XC2 to select a desired DVD 100 to be replayed, and disposal of the pickup unit at a given position for delivering the desired DVD 100. Thus, in the following, the description is given primarily to the mode in which the DVD case XC itself is handled for loading and unloading. Accordingly, in the following, a brief explanation is first given to the configurations and operations of the DVD player in connection with FIG. 7.

As shown in FIG. 7, the DVD player is equipped with a chassis 1B, DVD grasping mechanisms 2, DVD-case separation mechanisms 3, a desired-DVD separation mechanism 4, and a pickup unit 5. Of these, as shown in FIG. 7, a attaching/detaching opening 1BH for attaching and detaching a DVD case XC is formed at a frontal position of the chassis 1B. The DVD case XC is put into the chassis 1B through the attaching/detaching opening 1BH under the operation of a case-carrying mechanism. The case-carrying mechanism is, for example, configured to hold both sides of the DVD case XC to slidably move it. The DVD case XC is thus located at a given position which is an approximately spatial center among the foregoing constituents, that is, the DVD-grasping mechanisms 2, DVD-case separation mechanisms 3, desired-DVD separation mechanism 4, and pickup unit 5.

The DVD grasping mechanisms 2 include a chuck member 201 through which a ball screw is made to pass. Hence, by rotating the ball screw as far as predetermined angles, the chuck member 201 can be moved up or down for its level adjustment. The DVD-case separation mechanisms 3 include a tongue-like push pin 301, at a base end of which members such as a cam mechanism are disposed. This disposal allows the pin 301 to jump out rightward in the figure or retreat toward the left in the figure.

The desired-DVD separation mechanism 4 includes grasping/rotating members 401, arm members 402, and a ball screw 403. The grasping/rotating members 401 is formed to grasp both of the grips XG131 and XG231 of the foregoing guide mechanisms XG11 and XG2 attached to the DVD case XC and to rotate the grasped grips XG131 and XG231. Each grasping/rotating member 401 is provided at a tip end of each arm member 402. The ball screw 403 is disposed to pass through both of the base ends of the arm members 402. In addition, the arm members 402 are also configured such that they are able to rotate about a longitudinal axis of the ball screw 403. Hence the rotation of the ball screw 403 allows both of the arm members 402 and the grasping/rotating members 401 to move up and down in FIG. 7. Further, rotating the arm members 402 around their base ends enables their tip ends to not merely locate at the center of DVDs 100 contained in the DVD case XC loaded within the DVD player 1 but also retreat from the center of the DVDs 100. The grasping/rotating members 401, which respectively grasp the grips XG131 and XG231 of the guide mechanisms XG1 and XG2, are able to allow the grips XG131 and XG231 to rotate. The foregoing configurations are able to provide rotational operations to the ball screws XG13 and XG23 of the guide mechanisms XG1 and XG2, as shown in FIGS. 6A and 6B, with the result that the disc members XG11 and XG21 can be moved up and down. The arm members 402 may be modified in other various forms, because it is not always necessary that each of the arm members 402 is rotated around its base end. For instance, the arm members 402 may be fixed so that their tip ends locate at predetermined positions along the line that passes the grips XG131 and XG231 of the DVD case XC that has been loaded into the DVD player 1, as long as up-and-down movements of the arm members 402 permit the grasping/rotating members 401 to grasp the grips XG131 and XG132.

As illustrated in FIG. 7, the pickup unit 5 has a spindle motor 501 to rotate a desired DVD 100 to be replayed, a pickup to read pieces of content information recorded on a recording surface of each DVD 100, and a carriage motor 503 to move the pickup 502 in the radial direction of the DVDs 100. However, because these components have already been known, they will be omitted from being explained.

Hereafter, how to operate the DVD case XC according to the present embodiment will now be explained, with some operational modes of the DVD player 1 accompanied.

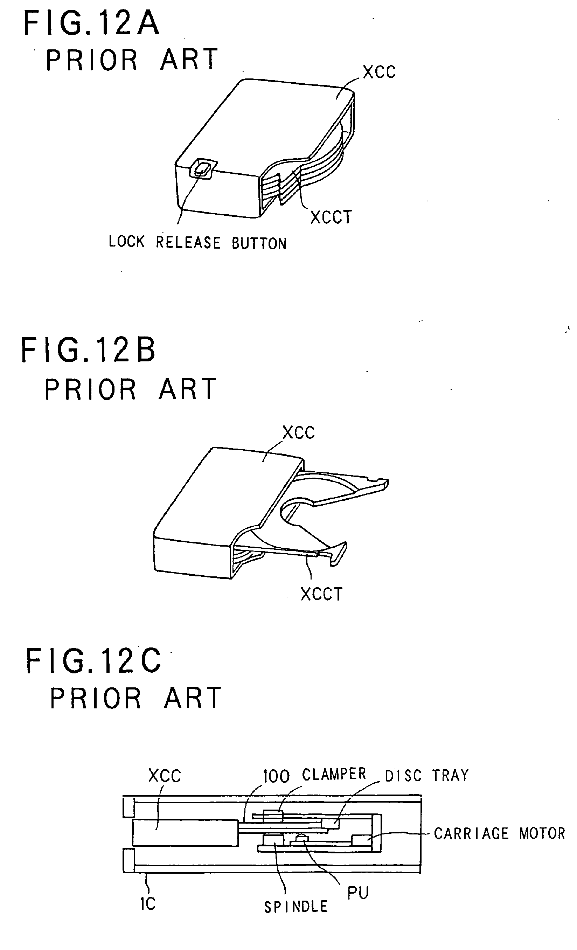

First, a plurality of DVDs 100 are loaded with the DVD case XC according to the present invention. This loading is carried out in such a manner that, as shown in FIG. 12, the guide mechanisms XG1 and XG2 are made to pass through the central holes100N of the DVDs 100 which are stacked one on another without gaps therebetween. Thus, each of the surfaces of each DVD 100 is directly touched to that of an adjacent one. In the following, exemplified is an example in which the number of DVDs 100 is six and the DVDs are referenced by 100(1), 100(2), ..., 100(6) from the top, as shown in FIG. 8.

The DVD case XC in which the DVDs 100 are contained is then loaded into the DVD player 1. The loaded DVD case XC is made to position at an approximately center among the foregoing various components within the DVD player 1.

In response to a user's command for replay, the DVD player 1 commences the replay processing. By way of example, an assumption can be made such that the user's command indicates that the fourth DVD 100(4) from the top within the DVD case XC is desired to be replayed.

When the DVD player 1 receives the command for replay, both of the DVD-grasping mechanisms 2 and the DVD-case separation mechanisms 3 start operating. In each of the DVD-grasping mechanisms 2, to grasp the fourth DVD 100(4), each chuck member 201 is obliged to move up and down to settle at a desired location to gasp the DVD 100(4). In addition, the present invention is particularly characteristic of grasping the desired DVD 100(4) through the openings XC14H and XC15H, and XC24H and XC25H (hereafter, representatively noted by "XC14H") formed through the sides of the DVD case XC. In other words, as described with FIG. 2, the outer circumferential edge of each DVD100 is partly exposed to the outside of the DVD case XC, thus facilitating the grasping operation.

In the DVD-case separation mechanism 3, Each tongue-member push pin 301 is forced to run through the notch XC142 (XC152) of the upper lid member XC1 of the DVD case XC so as to be push to each tongue-like member XC24Z (XC25Z) at an appropriately controlled pushing force. As a result, as shown in FIG. 3, the tongue-like member XC24Z (XC25Z) is pushed to be deformed into a curve form. Thus, the projections XC241 and XC251 of the lower lid member XC2 and the recesses XC141 and XC151 of the upper lid member XC1, which are disposed on both sides of the DVD case XC, can be separated from each other, so that the upper and lower lid members XC1 and XC2 can be separated, as will be described later.

In the desired-DVD separation mechanism 4 the grasping/rotating members 401 grasp the grip XG131 and XG231 of the guide mechanisms XG1 and XG2, respectively, and then rotate the guide mechanisms XG1 and XG2 by predetermined angles, respectively. Thus, as described with reference to FIGS. 6A and 6B, in the guide mechanisms XG1 and XG2, the disc members XG11 and XG21 are moved up and down along the inner holes of the cylindrical members XG12 and XG22, respectively.

Between each of the protrusions XG112 (XG212) and the central hole 100N of each DVD 100 is a "specific relationship," which will be described as follows. To be specific, as described with reference to FIGS. 6A and 6B, moving the disc members XG11 in the up-and-down direction and holding the inner circumference of the central hole 100N of a DVD 100 to be replayed by the protrusions XG12 will separate, from a DVD 100 to be replayed, one or more DVDs 100 located immediately on and/or beneath the DVD 100 to be replayed. In order to complete the above "movement" down to the third DVD 100(3) shown in FIG. 12, it is necessary for the disc member XG11 to pass in turn through the central holes 100N of the two DVDs 100(1) and 100(2). Hence a remarkably high rigidity of the protrusions XG112 makes such movements difficult or impossible. By contrast, when the disc member XG11 reaches the third DVD 100(3), the latter "holding" should be achieved for the third DVD100(3). However, the rigidity of the protrusions XG112 is too high, the holding operation is also difficult or impossible. Therefore, to fulfill the above two requirements under ordinary situations, a specific relationship between the protrusions XG112 and the central hole 100N of a DVD 100 should be met in terms of various factors such as materials and shapes.

More concretely, it is preferred that an imaginary circle produced by tracing the tips of the protrusions is equal in the dimension to the central hole 100N of a DVD 100 and the protrusions XG112 are made of materials having a properly selected amount of rigidity. In the present embodiment, as described before, the protrusions XG112 have been made of a material whose rigidity is suitable for the two requirements, whereby the "specific relationship" is fulfilled with steadiness.

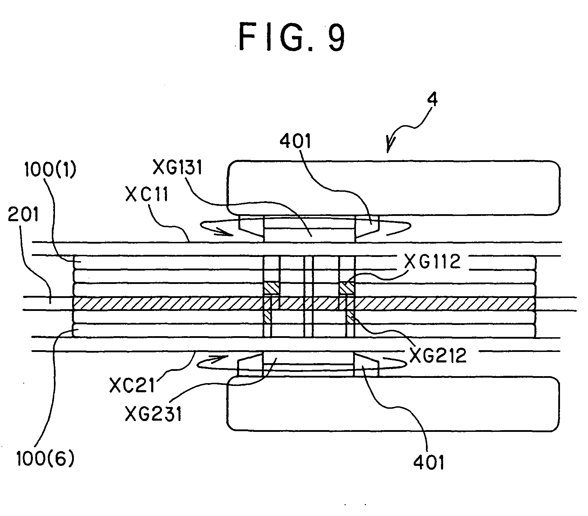

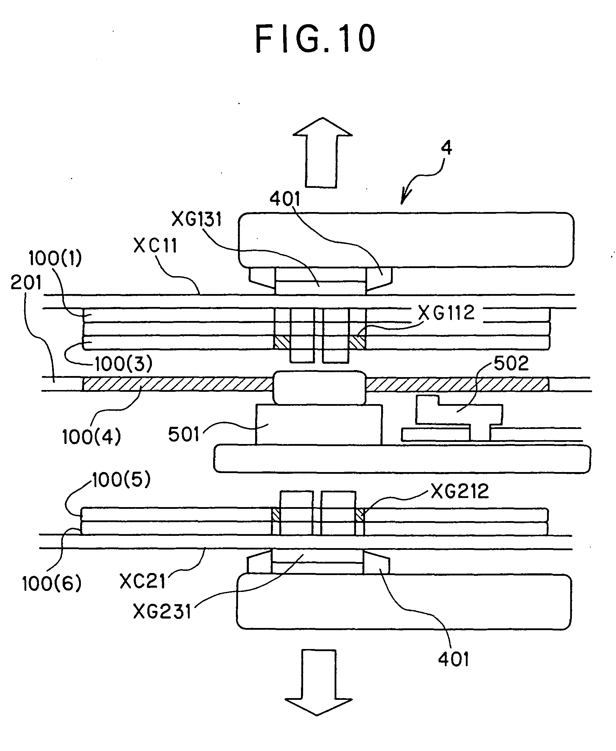

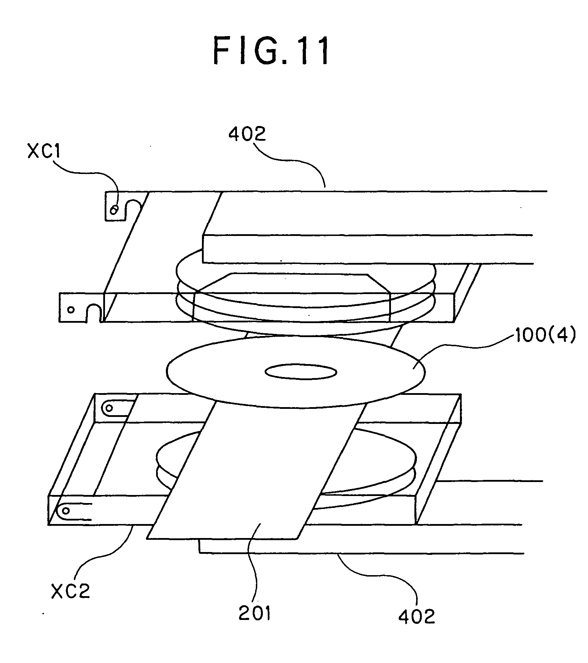

Therefore, the configuration according to the present invention allows the DVD 100(4) being replayed to be separated, as shown in FIGS. 9 and 10. Specifically, as shown in FIG. 9, the central holes 100N of the DVDs 100(3) and 100(5) immediacy on and beneath the DVD 100(4) to be replayed, which have been grasped by the chuck members 201 of the DVD-grasping mechanisms 2, are fixedly held by the protrusions XG112 and XG212 of the disc members XG11 and XG21 mounted to the guide mechanisms XG1 and XG2, respectively. This holding operation can be done as shown in FIG. 9, where the grips XG131 and XG231 of the guide mechanism XG1 and XG2 are grasped and rotated by the grasping/rotating members 401 of the desired-DVD separation mechanism 4. As described before, the protrusions XG112 and XG212 are made of a materiel whose elasticity is proper for those grasping/rotating operations and an imaginary circle formed by tracing the tips of such protrusions is approximately equal in the dimension to the central holes 100N of the DVDs 100. This makes it possible, with steadiness, the disc members XG11 and XG21 move smoothly and the protrusions XG112 and XG212 fixedly hold the circumferences of the holes 100N. Then, the desired-DVD separation mechanism is driven to move each of the arm members 402 upward or downward, as illustrated in FIG. 10. By those upward and downward movements of the arm members 402, the third DVD 100(3) fixedly held as shown in FIG. 9 and one or more DVDs located on and above the third DVD 100(3); that is, the DVDs 100(3), 100(2) and 100(1) are lifted up together with the upper lid member XC1, while the fifth DVD 100(5) fixedly held as shown in FIG. 13 and one or more DVDs located beneath the fifth DVD 100(5); that is, the DVDs 100(5) and 100(6) are lifted down together with the lower lid member XC2. As a result, the DVD 100(4) to be replayed appears to be suspended in the air within the DVD case XC, thus completing the separation of the target DVD 100(4) from the other DVDs. FIG. 11 pictorially shows the DVD 100(4) to be replayed, which is almost suspended in the DVD case XC. In addition, the upper and lower lid members XC1 and XC2 are separated from each other such that one is lifted up and the other is lifted down. Only the DVD 100(4) grasped by the chuck members 201 is exposed to the outside as if the DVD 100(4) is suspended in the air.

After this separation, the pickup unit 5 is moved to a predetermined location to fit the output shaft of the spindle motor 501 into the central hole 100N of the DVD 100(4) to be replayed and to position the pickup 503 at a given position face to face toward an information recorded surface of the DVD 100(4) (refer to FIG. 11). Then, the pickup unit 15 in the ordinary fashion carries out the reply processing.

Accordingly, the DVD case XC is able to operate as above, so that the DVD case XC occupies only a smaller space within the internal space of the DVD player 1, unlike the conventional, even if a plurality of DVDs 100 are replayed successively. In other words, when the DVD case according to the present embodiment is employed, the DVD player 1 can be made more compact, in which a plurality of DVDs 100 can be subjected to replay carried out successively. This performance is derived from the condition that, as descried above, a sufficient distance should be held between the information recorded plane of the grasped fourth DVD 100(4) and the two DVDs 100(5) and 100(6) in order to accept the pickup unit 5 therebetween but it is enough only if a distance between the fourth DVD 100(4) and the three DVDs 100(1) to 100(3) is set to a minimum amount that avoids the DVDs from interfering one with other. In short, the operations needed to separate the DVD 100(4) from the others in the DVD player 1 occupies a relatively smaller space, the DVD player 1 can be configured into a more compact form.

In addition, in the present embodiment, the successive replay processing from one DVD 100(n1) to the next one 100(n2) (n1#n2) can be performed quickly in a short time without interruptions due to manual operations. This advantage is also derived from the fact that operations necessary for separating a DVD 100 to be replayed are limited to a relatively smaller space.

The above operations and advantages obtained in the present embodiment will be made clearer when compared with a conventional disc case XCC shown in FIGS. 12A to 12C. FIGS. 12A to 12C illustrate the construction of a conventional disc case XCC, wherein FIG. 12A is an entire view of the disc case XCC, FIG. 12B is also an entire view showing a tray XCCT drawn from the disc case XCC, a DVD 100 being laid on the tray, and FIG. 12C illustrates the inside of a conventional DVD player 1C loaded with the disc case XCC.

As understood from FIGS. 12 A to 12C, the conventional disc case XCC is similar to the DVD case XC according to the present embodiment in that a plurality of DVDs 100 can be accommodated therein, but different from the DVD case XC in that the DVDs 100 are loaded into the conventional disc case XCC, with each DVD 100 laid on each tray XCC. Therefore, for selecting a desired DVD 100 to be replayed, the tray XCCT on which the desired DVD 100 is laid should be drawn from the disc case XCC, as illustrated in FIG. 12B. This drawing operation results in that, as shown in FIG. 12C, apart from the space occupied by the disc case XCC itself, the conventional DVD player 1C required an additional internal space into which the tray XCCT is drawn. That is, this additional apace should be preserved in advance in the conventional DVD player 1C. Moreover, in performing a successive replay from one DVD to the next DVD, a tray XCCT should be first carried into the disc case XCC (i.e., carrying in a DVD that has been replayed), and then another tray should be carried out of the disc case XCC (i.e., carrying out another DVD to be replayed). These were relatively time-consuming operations.

By contrast, the DVD case XC of the present embodiment is able to resolve the foregoing two problems without failure. That is, the DVD player 1, which is compact in the dimensions, is able to successively replay DVDs in a smooth and quick manner.

In particular, the above advantages provided by the DVD case XC of the present embodiment become more noticeable when the DVD player 1 is mounted on a vehicle. Since it is possible to produce a more compact DVD player 1 than the conventional, such a DVD player 1 can be equipped as part of the dashboard giving crews more pleasant operations, without being equipped in the trunk and others, which have conventionally been taken place.

Furthermore, the DVD case XC according to the present embodiment provides an enhanced convenience of portability, which is an advantage gained even when there is not provided the foregoing DVD player 1.

To be specific, the DVD case XC of the present embodiment can be used as follows. In the normal state, the projections XC241 and XC251 of the lower lid members XC2 are fit into the recesses XC141 and XC151 of the upper lid member XC1. Hence as shown in FIG. 1, the upper lid member XC1 (or the lower lid member XC2) can be rotated against the lower lid member XC2 (or the upper lid member XC1) around an axis passing the fit portions, so that the open and close operations of the DVD case XC can be realized. It is therefore possible to use the DVD case XC totally in the same manner as disc cases that have been widely supplied in the market. Furthermore, the guide mechanism XG1 on the upper lid member XC1 can be fit into the guide member XG2 on the lower lid member XC2, a plurality of DVDs 100 can be secured firmly in the DVD case XC, provided the DVD case XC is closed. In the present embodiment, the foregoing various characteristic configurations result in that the DVD case XC can be used conveniently in cases where a plurality of DVDs 100 are subjected to handling, such as storage and delivery.

Although the above embodiment has been described such that the number of DVDs containable into the DVD case XC is six, the present embodiment is not limited to such a mode. A desired number of DVDs are containable into the DVD case XC.

Furthermore, although the foregoing embodiment has been described on the DVD case XC for containing DVDs 100, the present invention is not limited to such a mode. Alternately, disc cases to contain other disc-like recording mediums, such as CDs or MDs, can be realized based on the identical configurations to the above.

Although the description above contains many specificities, these should not be construed as limiting the scope of the invention but as merely providing illustrations of some of the presently preferred embodiments of the present invention. Thus the scope of the present invention should be determined by the appended claims and their equivalents.

## Claims

1. A container(XC) for containing a disc-like recording medium, **characterized in that** the container(XC) comprises:
a first lid member (XC1) and a second lid member (XC2) which are configured to be separable one from the other; and
fixing members (XG1, XG2) secured on the first and second lid members(XC1, XC2) respectively and configured to fix a plurality of disc-like recording mediums overlapped coaxially one on another, each of the first and second lid members(XC1, XC2) having an opening (XC14H, XC15H, XC24H, XC25H) formed therethrough to expose at least part of outer circumferential edges of the plurality of disc-like recording mediums to an outside of the first and second lid members(XC1, XC2).

2. The container(XC) according to claim 2, **characterized in that** the fixing members(XG1, XG2) are configured to fix the disc-like recording mediums such that planes of the disc-like recording mediums come into contact with each other.

3. The container(XC) according to either one of claim 1 or 2, **characterized in that** the fixing members(XG1, XG2) are formed into a cylindrical shape fittable in a central hole of each of the plurality of disc-like recording mediums.

4. The container(XC) according to any one of claims 1 to 3, **characterized in that** the first and second lid members(XC1, XC2) are configured to enable the first lid member(XC1) to open and close to the second lid member(XC2) in a state where a recess (XC141, XC151) formed on one of the first and second lid members(XC1, XC2) is fitted with a protrusion (XC241, XC251) formed on the other of the first and second lid members(XC1, XC2) and to enable the first and second lid members(XC1, XC2) to be separable from each other by releasing the fitted state between the fist and second lid members(XC1, XC2).

5. The container(XC) according to claim 4, **characterized in that** the fixing members(XG1, XG2) consist of a first fixing member (XG1) secured on the first lid member(XC1) and a second fixing member (XG2) secured on the second lid member(XC2), both of the first and second lid members(XC1, XC2) being formed approximately into cylindrical shapes and the first fixing member(XG1) being smaller in a diameter than the second fixing member(XG2),
wherein the first fixing member(XG1) is fittale to the second fixing member(XG2) in cases where the first lid member(XC) is closed to the second lid member(XC2) around an axis passing both the recess(XC141, XC151) and the protrusion(XC241, XC251) that are fitted with each other.

6. The container(XC) according to either one of claim 4 or 5, **characterized in that** a releasing member (XC24Z, XC25Z) for releasing the fitted state between the recess(XC141, XC151) and the protrusion(XC241, XC251) is arranged on at least one of the first and second lid members(XC1, XC2).

7. The container(XC) according to claim 6, **characterized in that** the releasing member (XC24Z, XC25Z) includes a deformable portion formed as a given deformable region included in one of the first and second lid members(XC1, XC2) provided with one of the recess(XC141, XC151) and the protrusion(XC241, XC251).
